# EUROPEAN PATENT APPLICATION

(11) **EP 4 471 205 A1**
(43) Date of publication of application: **04.12.2024**
(21) Application number: 23707789.6
(22) Date of filing: 23.01.2023
(51) Int. Cl.: D21H 11/04, B32B 29/00, B32B 29/08, D21H 11/08, D21H 11/10, D21H 27/10, D21H 27/40

(54) **KRAFTLINER PAPER MADE FROM MECHANICAL PULP AND CHEMICAL PULP AND PAPER PRODUCTS CONTAINING SAME**

(30) Priority: 24.01.2022 PT 2022117752
(71) Applicant: RAIZ - Instituto De Investigação Da Floresta E Papel, 3800-783 Eixo, Aveiro (PT)
(72) Inventor: RAMOS DOS SANTOS, Bruna Filipa, 3800-783 Eixo (PT); ALMEIDA FERREIRA, Catarina Isabel, 3800-783 Eixo (PT); DE OLIVEIRA RODRIGUES PINTO, Paula Cristina, 3800-783 Eixo (PT); ALVES RAMOS RODRIGUES, Ricardo Jorge, 3800-783 Eixo (PT)
(86) International application number: PCT/IB2023/050543
(87) International publication number: WO 2023/139551

(57) **Abstract**

The present invention relates to a kraftliner paper comprising a mechanical pulp and a chemical pulp. The kraftliner paper of the invention has strength properties necessary for typical kraftliners applications and improved printing quality, of particular interest for printing techniques such as offset printing, rotogravure and inkjet. Another aspect of the present invention relates to paper products comprising the kraftliner paper of the present invention. The invention is in the field of the paper industry.

## Description

### TECHNICAL FIELD

The present invention relates to a kraftliner paper comprising a mechanical pulp and a chemical pulp. Additionally, the invention relates to paper products comprising the kraftliner paper. The invention is in the field of the paper industry.

### BACKGROUND ART

The paper constituting the top and bottom layer of a corrugated board, when the fiber used is virgin fiber chemically produced by the Kraft process, is named kraftliner paper. The kraftliner paper may be a brown kraftliner paper, i.e., unbleached, a white top kraftliner paper, where the top layer is constituted by bleached kraft pulp, and a white coated kraftliner which additionally features a surface coating. A kraftliner paper can have one layer or two layers, a top layer and a base layer (Papermaking science and technology. Book 18. Paper and board grades, Hannu Paulapuro, Helsinki: Fapet 2000).

According to the Confederation of European Paper Industries (CEPI), a brown kraftliner for grammages below 250 g/m², presents a burst index greater than or equal to 3.5 kPa.m²/g (measured according to the ISO 2758) or greater than or equal to 3.6 kPa.m²/g (measured in accordance with ISO 2759), or a compressive strength index (SCT index, Short span Compression Test) greater than or equal to 18.0 N.m/g. For grammages greater than or equal to 250 g/m², a kraftliner has a burst index greater than or equal to 3.0 kPa.m²/g (measured in accordance with ISO 2758) or greater than or equal to 3.0 kPa. m²/g (measured according to ISO 2759), or an SCT index greater than or equal to 17.5 N.m/g (European list of corrugated base papers, CEPI, 5^{th} Edition).

One of the most industrially used chemical processes for the production of pulp from wood is Kraft cooking, or sulfate cooking. This chemical process consists of cooking the wood in a cooking liquor usually consisting of sodium hydroxide and sodium sulfide, at temperatures of around 140 to 180 °C (Ek, Monica; Gellerstedt, Göran; Henriksson, Gunnar; Pulp and Paper Chemistry and Technology Volume 2, Pulping Chemistry and Technology, 2009, De Gruyter, Berlim).

Kraftliner papers are used for packaging, protection and transport of different consumer goods such as, for example, fruits and vegetables, electronic products and other industrial goods. They are produced using virgin chemical fibers, due to their high mechanical resistance. In addition to being used in corrugated cardboard, kraftliners papers can be used in other applications of paper products for packaging, and their different categories must present different physical and mechanical properties, such as mechanical strength and printing quality, in order to meet the requirements and needs of consumers and end users.

Patent document CN108252137B describes the process of preparing a kraftliner with a superior tensile index that includes the use of wastepaper such as used corrugated paper. However, this patent only addresses conventional kraftliners produced from chemical fiber.

Patent CN101586317B describes a kraftliner, resistant and with good performance in terms of brightness, smoothness and printability, consisting of different coating layers, arranged sequentially and with different compositions of calcium carbonate and kaolin. As well, this patent only refers to conventional kraftliners produced from chemical fiber.

Therefore, there is a need for a kraftliner paper with lower roughness values for a given thickness, maintaining strength properties within the industry requirements which, in this way, provides improved printing qualities compared to conventional solutions existing in the state of the art.

### SUMMARY OF INVENTION

The present invention is directed to a kraftliner paper comprising a chemical pulp and a mechanical pulp.

A second aspect of the present invention is a paper product comprising the kraftliner paper.

### BRIEF DESCRIPTION OF DRAWINGS

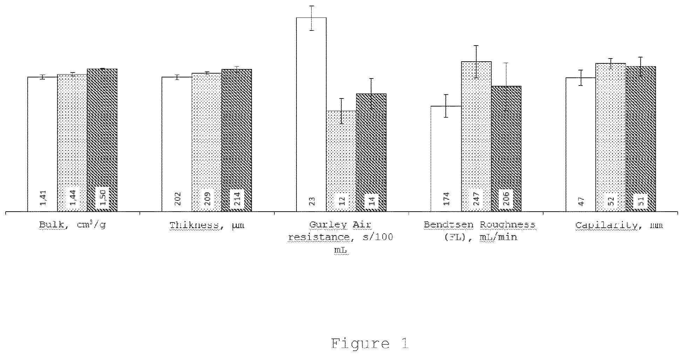

Fig. 1 shows the comparative results referring to the structural properties of 3 sheets of selected pulps with: composition of 100% by weight of eucalyptus kraft pulp (white bars); composition of 95% by weight of eucalyptus kraft pulp and 5% by weight of mechanical pulp (dotted bars); and composition of 85% by weight of eucalyptus kraft pulp and 15% by weight of mechanical pulp (listed bars).

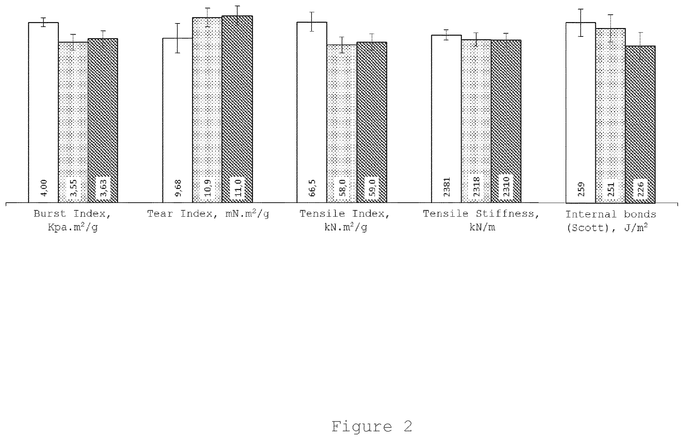

Fig. 2 shows the comparative results referring to the mechanical strength properties of 3 sheets of selected pulps with: composition of 100% by weight of eucalyptus kraft pulp (white bars); composition of 95% by weight of eucalyptus kraft pulp and 5% by weight of mechanical pulp (dotted bars); and composition of 85% by weight of eucalyptus kraft pulp and 15° by weight of mechanical pulp (listed bars).

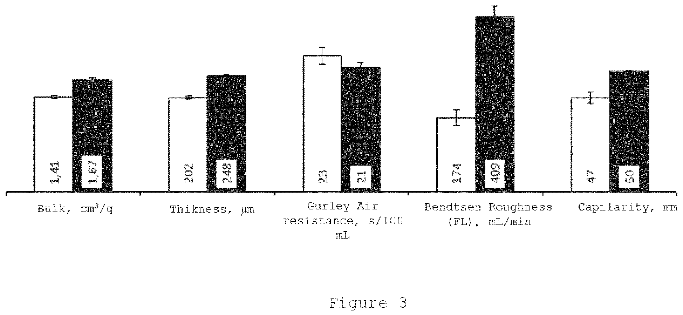

Fig. 3 shows the comparative results referring to the structural properties of 3 sheets of selected pulps with: composition of 100% by weight of eucalyptus kraft pulp (white bars) and composition of 70% by weight of eucalyptus kraft pulp and 30% by weight of mechanical pulp (solid bars).

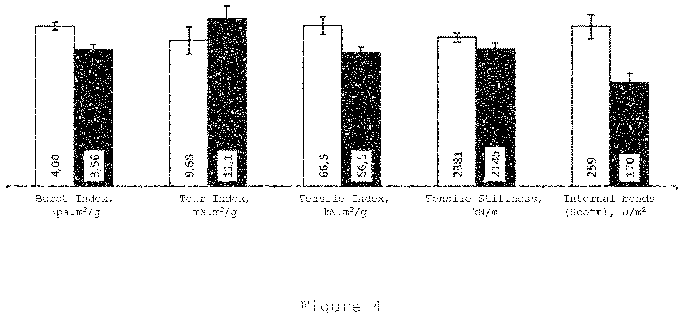

Fig. 4 shows the comparative results referring to the mechanical strength properties of 3 sheets of selected pulps with: composition of 100% by weight of eucalyptus kraft pulp (white bars) and composition of 70% by weight of eucalyptus kraft pulp and 30% by weight of mechanical pulp (solid bars).

### DETAILED DESCRIPTION AND DESCRIPTION OF PREFERRED EMBODIMENTS

A kraftliner paper is traditionally produced from virgin fiber chemically produced by the Kraft process. This paper category presents values of mechanical strength properties according to the classification of the Confederation of European Paper Industries (CEPI): for grammages below 250 g/m², it presents a burst index greater than or equal to 3.5 kPa. m²/g (measured in accordance with ISO 2758) or greater than or equal to 3.6 kPa.m²/g (measured in accordance with ISO 2759), or an SCT index greater than or equal to 18.0 N.m/g. For grammages greater than or equal to 250 g/m², a kraftliner has a burst index greater than or equal to 3.0 kPa.m²/g (measured in accordance with ISO 2758) or greater than or equal to 3.0 kPa. m²/g (measured according to ISO 2759), or an SCT index greater than or equal to 17.5 N.m/g.

The present invention relates to a kraftliner paper comprising mechanical pulp and chemical pulp which, surprisingly, combines lower roughness values for a given thickness with strength properties within the industry requirements and which are necessary for the typical applications of kraftliners. Indeed, a skilled person would expect that the inclusion of mechanical pulp in the production of kraftliner paper would lead to a significant decrease in the mechanical strength properties of that paper.

Additionally, since mechanical pulp production processes are characterized by higher yields, a kraftliner produced with mechanical pulp leads to less wood consumption in its production.

It is also verified that higher incorporations of mechanical pulp originate low roughness, when the paper is calendered in the Paper Machine, for the same thickness of a kraftliner paper without mechanical pulp, which, in turn, allows printing on the kraftliner of the invention. This feature is of particular interest for printing techniques such as offset printing, rotogravure and inkjet.

According to the definition of the Confederation of European Paper Industries (CEPI), (Pulp and Paper Industry - Definitions and Concepts, CEPI - January 2021), a mechanical pulp is a cellulosic pulp produced through mechanical processes that separate and defiber the wood until the constitution of the pulp. To obtain mechanical pulps, chemical pre-treatments may also be included. Mechanical pulps are so designated according to their production method and inclusion, or not, of pre-treatments, by mechanical pulp, thermomechanical pulp (TMP), chemical-mechanical pulp (CMP) and chemical-thermomechanical pulp (CTMP). Mechanical pulp is a pulp obtained by mechanical means of wood processing, thermomechanical pulp is a pulp obtained by mechanical means with a pre-treatment at high temperatures and pressures, and chemical-mechanical and chemical-thermomechanical pulps are pulps obtained by mechanical means preceded by chemical pre-treatments.

Chemical pulp is a cellulosic pulp produced exclusively through any chemical process that causes the dissolution of lignin in the wood in order to release the fibers from the matrix.

Kraft refers to Kraft cooking, or sulfate cooking. This chemical process consists of cooking the wood in a cooking liquor usually made up of sodium hydroxide and sodium sulfide, at temperatures of the order of 140 to 180 °C.

Bulk starch (added to the pulp suspension) refers to any starch used as an additive in pulp for pulp and paper production, for example, but not limited to potato, tapioca, corn starch and mixtures thereof.

Surface starch (added to the paper surface) refers to any starch used as an additive on the surface of any paper or paperboard in its production, for example, but not limited to potato, tapioca, corn starch and mixtures thereof.

Grammage means the quotient between the mass and the area of a sample. It is defined as the mass per unit of paper surface. Measured by the ISO 536 standard.

Bulk is the volume per mass or weight unit of the paper and is measured following the ISO 534 standard.

Thickness is the perpendicular distance between the two faces of a sheet of paper determined under the conditions of the normalized test method (100 kpa of pressure and 200 mm² of area), measured by ISO 534 standard.

Gurley air resistance is the time required for a certain volume of air to pass through, under constant pressure, a certain area of paper. Like air permeability, it quantifies the paper's ability to allow air to pass through. This is measured by the ISO 5636-5 standard. Bendtsen roughness is the measurement of the rate at which air will pass between a flat circular glass head and a paper surface, measured by the ISO 8791-2 standard.

Burst index is the ratio between the resistance to bursting (maximum uniform pressure supported by a paper test piece in an area of 30.5 mm in diameter) and the grammage. Measured by ISO 2758 standard.

Tear index is the ratio between tear resistance (average force required to tear a sheet of paper in which an initial tear has been made) and grammage. Measured by the ISO 1974 standard.

Capillarity is measured by the ISO 5270 standard; NP 686 and corresponds to measuring the capillary rise of paper and board.

Tensile stiffness is the force required to break a sheet of paper 15 mm wide when subjected to traction exerted on its ends under the conditions indicated in the test. Measured by ISO 1924-2 standard.

Tensile index is the ratio between tensile stiffness and grammage. Measured by ISO 1924-2 standard.

Internal bonds (Scott) correspond to the energy required to delaminate a sheet of paper in the Z direction under the action of a mass-controlled pendulum (Scott-Bond resistance). It is equivalent to tensile strength in the Z direction, and is measured by the ISO 5270 standard; T 569.

The Shopper-Riegler degree measure corresponds to an empirical measure of pulp refining, in which an amount of 1000 mL corresponds to 0°SR, while a zero amount of drained liquid corresponds to 100°SR.

The calendering process is the last stage of the typical process of producing a kraftliner paper, which allows to improve the surface properties of the paper and to control its thickness profile.

The present invention thus relates to a kraftliner paper comprising a chemical pulp and a mechanical pulp, in a preferred embodiment comprising 5 to 30% by weight of mechanical pulp, and in an even more preferred embodiment of 5 to 15% by weight of mechanical pulp, selected from among the alternatives of mechanical pulp, thermomechanical pulp (TMP), chemical-mechanical (CMP) and chemical-thermomechanical (CTMP). The kraftliner paper of this invention can include any type of cellulosic fibers, such as softwood and hardwood fibers, in a preferred embodiment of eucalyptus.

In a preferred embodiment, the kraftliner paper comprises from 5% to 30% by weight of mechanical pulp.

In a preferred embodiment the kraftliner paper comprises from 5% to 15% by weight of mechanical pulp.

In a preferred embodiment the mechanical pulp is selected from the group consisting of mechanical pulp, thermomechanical pulp (TMP), chemical-mechanical (CMP) and chemical-thermomechanical (CTMP).

The kraftliner paper of this invention can include any type of cellulosic fibers, such as softwood and hardwood fibers.

In a preferred embodiment, the chemical pulp is eucalyptus pulp.

The present invention further relates to paper products comprising the kraftliner paper of the invention.

In a preferred embodiment, the paper product is selected from the group consisting of flexible package, corrugated cardboard box and tray.

Preferably, the flexible packaging is selected from the group consisting of a pharmaceutical bag, a pastry bag, a catering bag, a shopping bag, a food takeaway bag, a dry food package, an e-commerce and a wrapping paper.

### Examples

### Pulps

It was used an eucalyptus kraft pulp prepared from a sample of chemical pulp composed of fractions of 330 g_{OD} (OD-oven dry (absolutely dry)) of 6 random sheets of a bale. This combined sample served as the basis for preparing batches for refining and sheet formation.

As mechanical pulp, a chemical-thermomechanical pulp (CTMP) was used.

### Example 1

### Preparation of laboratory sheets of 135 gOD/m²

Batches of 30 g_{OD} of pulp were prepared, in the following percentages:
I. 100% by weight of eucalyptus kraft pulp;
II. 95% by weight of eucalyptus kraft pulp + 5% by weight of mechanical pulp;
III. 85% by weight of eucalyptus kraft pulp + 15% by weight of mechanical pulp.

A refining curve of each mixture was made in a PFI refiner, according to ISO 5264-2, to obtain the necessary refining energy to obtain a Shopper-Riegler degree between 30 and 32. After refining, a suspension of each mixture was prepared with a 0.4% consistency. Then, isotropic laboratory sheets of 135 g_{OD}/m² were prepared by adapting the ISO 5269-1 standard.

Sheets prepared with 85% by weight of eucalyptus kraft pulp + 15% by weight of mechanical pulp were subjected to a calendering process in order to obtain the same sheet thickness as the other formulations. Calendering was carried out on a Beloit Wheeler Model 703 laboratory calender, on the hard/hard nip (passage between two steel rollers), with the flat side of the sheet facing the steel roller heated to a temperature of 60°C; speed of 4 m/min and pressure tuned on the variable manometer.

### Characterization of sheets of 135 g_{OD}/m²

The papermaking properties (structural and mechanical strength parameters) of the sheets prepared were determined according to the standardized methodologies described in Table 1.

**Table 1 - Structural and physical tests and corresponding standards.**

| | |
|---|---|
| Grammage, g/m² | ISO 536 |
| Thickness, µm | ISO 534 |
| Bulk, m³/kg | ISO 534 |
| Gurley Air Resistance, (100 mL) /s | ISO 5636-5 |
| Bendtsen Roughness (FL), mL/min | ISO 8791-2 |
| Burst Index, kPa. m²/g | ISO 2758 |
| Tensile Index, N.m/g | ISO 1924-2 |
| Tensile Stiffness, kN/m | ISO 1924-2 |
| Tear Index, mN.m²/g | ISO 1974 |

### Structural properties

Figure 1 shows the results of the structural properties of sheets of 135 g_{OD}/m² obtained from 100% by weight of eucalyptus kraft pulp and incorporation of mechanical pulp (5% and 15% by weight) . It is possible to verify that the incorporation of 5% and 15% by weight of mechanical fibers allowed an increase in the bulk of 2% and 6%, respectively, more significant when 15% by weight of mechanical pulp is incorporated. The Gurley air resistance decreased significantly (about 48% in the composition 95% by weight of eucalyptus kraft pulp + 5% by weight of mechanical pulp) in relation to the 100% by weight sheets of eucalyptus kraft pulp. An increase in the roughness parameter was verified when mechanical pulp was incorporated between about 20% and 40% in relation to sheets with 100% by weight of eucalyptus kraft pulp (conventional, state of the art).

The increase in roughness that was verified in the laboratory tests, and to occur in the Paper Machine, was compensated by the effect of the calendering load applied on the calender (also industrially present), for a certain targeted thickness, allowing to reduce the roughness of the kraftliner paper with incorporation of mechanical pulp. Thus, through the calendering of laboratory sheets with the incorporation of 15% by weight of mechanical pulp, whose sheets present a greater value of thickness when compared to the sheets without the incorporation of mechanical pulp, and having established, as an example, the objective of obtaining a thickness of 200 µm, and having applied, as an example, a calendering load of 200 psig in the calendering (T=60°C, speed=4 m/min), for sheets with the incorporation of 15% by weight of mechanical pulp, it was observed (Table 2) a reduction of about 30% of roughness in relation to the sheets with 100% of chemical pulp, for the same thickness, allowing to obtain a printing quality of the surface of the kraftliner with the incorporation of mechanical pulp. It is then possible to verify that the incorporation of mechanical fiber allowed the reduction of roughness after the calendering process, as a result of the increase in the thickness of the sheets (which requires higher pressures in the calendering process, thus producing less roughness for a given reference thickness).

**Table 2 - Pressures applied in the calendering process and roughness values after calendering for different objective thickness values for sheets of 135 g_{OD}/m², of selected pulps with a composition of 100% by weight of eucalyptus kraft pulp and with a composition of 85% by weight of eucalyptus kraft pulp and 15% by weight of mechanical pulp.**

| Target thickness (± 2 µm) | 100% by weight of eucalyptus kraft pulp | | 85% by weight of eucalyptus kraft pulp and 15% by weight of mechanical pulp | |
|---|---|---|---|---|
| | Calendering pressure (psig) | Bendtsen roughness (mL/min) | Calendering pressure (psig) | Bendtsen roughness (mL/min) |
| 200 | 0 | 174 | 200 | 123 |
| 195 | 117 | 134 | 208 | 121 |
| 190 | 172 | 117 | 255 | 108 |
| 185 | 226 | 101 | 302 | 92 |

### Mechanical strength properties

The results of the mechanical strength properties of sheets of 135 g_{OD}/m² obtained from a chemical pulp 100% by weight (eucalyptus kraft pulp) and with incorporation of mechanical pulp (5% and 15% by weight) are shown in Figure 2. It was possible to verify that the incorporation of 5% and 15% by weight of mechanical fiber in Kraft pulp did not significantly affect the properties of tear index and tensile index and stiffness (variations below 15%). Burst index values did not show significant variation with the incorporation of up to 15% by weight of mechanical pulp and were found to be above the minimum value required for a kraftliner paper with a grammage less than 250 g/m² (3.5 kPa m²/g), according to the classification of the Confederation of European Paper Industries (CEPI).

### Example 2

Batches of 30 g_{OD} of pulp were prepared in the percentages of 70% by weight of eucalyptus kraft pulp and 30% by weight of mechanical pulp.

The respective refining, the formation of sheets, the determination of their papermaking properties, structural and mechanical strength properties, and the calendering process were carried out as described in Example 1.

### Structural properties

Figure 3 shows the results of the structural properties of sheets of 135 g_{OD}/m² obtained from 100% by weight of eucalyptus kraft pulp (same results obtained in example 1) and with incorporation of 30% by weight of mechanical pulp. It is possible to verify that the incorporation of 30% by weight of mechanical fiber allowed a bulk increase of 18%. An increase of more than 100% in the roughness parameter was verified when 30% by weight of mechanical pulp was incorporated in relation to sheets with 100% by weight of eucalyptus kraft pulp (conventional, state of the art) .

The increase in roughness that was verified in the laboratory tests, and to occur in the Paper Machine, was compensated by the effect of the calendering load on the calender (also industrially present), for a certain objective thickness, allowing to reduce the roughness of the kraftliner paper with the incorporation of mechanical pulp. Thus, through the calendering of laboratory sheets with the incorporation of 30% by weight of mechanical pulp, whose sheets show a greater value of thickness when compared to the sheets without incorporation of mechanical pulp, and having established, as an example, the objective of obtaining a thickness of 200 pm, and having applied, as an example, a calendering load of 340 psig in the calendering (T=60°C, speed=4 m/min), for sheets with 30% mechanical pulp by weight incorporation, it was observed (Table 3) a reduction of about 34% in roughness in relation to the sheets with 100% chemical pulp, for the same thickness, allowing to obtain a printing quality on the surface of the kraftliner with the incorporation of mechanical pulp.

As concluded in example 1, the incorporation of 30% by weight of mechanical fiber also allowed the reduction of roughness after the calendering process, as a result of the increased thickness of the sheets (which requires higher pressures in calendering, thus producing lower roughness for a given reference thickness).

**Table 3 - Pressures applied in the calendering process and roughness values after calendering for different target thickness values for sheets of 135 g_{OD}/m², of selected pulps with a composition of 100% by weight of eucalyptus kraft pulp and with a composition of 70% by weight of eucalyptus kraft pulp and 30% by weight of mechanical pulp.**

| Target thickness (± 2 µm) | 100% by weight of eucalyptus kraft pulp | | 70% by weight of eucalyptus kraft pulp and 30% by weight of mechanical pulp | |
|---|---|---|---|---|
| | Calendering pressure (psig) | Bendtsen roughness (mL/min) | Calendering pressure (psig) | Bendtsen roughness (mL/min) |
| 200 | 0 | 174 | 340 | 114 |
| 195 | 117 | 134 | 365 | 102 |
| 190 | 172 | 117 | 389 | 89 |
| 185 | 226 | 101 | 413 | 76 |

### Mechanical strength properties

The results of the mechanical strength properties of sheets of 135 g_{OD}/m² obtained from a chemical pulp 100% by weight (eucalyptus kraft pulp) and with the incorporation of 30% by weight of mechanical pulp are shown in Figure 4. It was possible to verify that the incorporation of 30% by weight of mechanical fibers in kraft pulp did not significantly affect the properties of tear index and tensile index and stiffness (variations below 150). Burst index values did not show significant variation with the incorporation of up to 30% by weight of mechanical pulp and were above the minimum value required for kraftliner papers with grammages less than 250 g/m² (3.5 kPa m²/g), according to the classification of the Confederation of European Paper Industries (CEPI).

## Claims

1. A kraftliner paper comprising a chemical pulp and a mechanical pulp.

2. The kraftliner paper according to claim 1, wherein the kraftliner paper comprises from 5% to 30% by weight of the mechanical pulp.

3. The kraftliner paper according to any of the preceding claims, wherein the kraftliner paper comprises from 5% to 15% by weight of the mechanical pulp.

4. The kraftliner paper according to any of the preceding claims, wherein the mechanical pulp is selected from the group consisting of mechanical, thermomechanical, chemical-mechanical and chemical-thermomechanical pulp.

5. The kraftliner paper according to any of the preceding claims, wherein the chemical pulp is eucalyptus pulp.

6. A paper product comprising the kraftliner paper as claimed in any of the previous claims.

7. The paper product according to the preceding claim, wherein the paper product is selected from the group consisting of flexible packaging, corrugated cardboard box and tray.

8. The paper product according to claim 7, wherein the flexible packaging is selected from the group consisting of a bag for pharmaceutical products, a bakery bag, a catering bag, a shopping bag, a food takeaway bag, a dry food package, an envelope for e-commerce and a wrapping paper.
